# EUROPÄISCHE PATENTSCHRIFT

(11) **EP 0 494 166 B1**
(45) Veröffentlichungstag und Bekanntmachung des Hinweises auf die Patenterteilung: **27.10.1993**
(21) Anmeldenummer: 90913179.9
(22) Anmeldetag: 08.08.1990
(51) Int. Cl.: B23B 13/08

(54) **ZUFÜHRVORRICHTUNG FÜR DIE DÄMPFUNGSFLÜSSIGKEIT IN FÜHRUNGSROHREN BEI MEHRSPINDEL-DREHMASCHINEN UND DERGLEICHEN**
FEED DEVICE FOR THE DAMPING FLUID IN GUIDE TUBES IN MULTI-SPINDLE LATHES AND THE LIKE
DISPOSITIF D'AMENEE DE FLUIDE D'AMORTISSEMENT DANS DES TUBES CONDUCTEURS SUR DES TOURS MULTIBROCHES ET SIMILAIRE

(30) Priorität: 21.08.1989 DE 3927532
(43) Veröffentlichungstag der Anmeldung: 15.07.1992
(73) Patentinhaber: HAINBUCH PRÄZISIONSSPANNWERKZEUGFABRIK GMBH, D-71672 Marbach (DE)
(72) Erfinder: WELLER, Hans-Michael, D-7142 Marbach 1 (DE)
(74) Vertreter: Kastner, Hermann, Dipl.-Ing. Patentanwalt
(86) Internationale Anmeldenummer: EP9001300
(87) Internationale Veröffentlichungsnummer: WO9102612

(56) Entgegenhaltungen:
- EP-A- 0 371 373
- US-A- 3 890 860
- US-A- 4 577 536

## Beschreibung

Mehrspindel-Drehmaschinen haben mehrere Stangenführungen für die stangenförmigen Werkstücke, die vom rückwärtigen Ende der Drehmaschine den Arbeitsspindeln abschnittweise zugeführt werden. Diese Zuführung erfolgt meist mechanisch mittels Vorschubzangen. Die Stangenführungen sind im allgemeinen als Führungsrohre ausgebildet, in die die Stangen vom rückwärtigen Ende her bis in die Vorschubzangen hinein eingeschoben werden, die sich ihrerseits in den Arbeitsspindeln befinden und mit diesen umlaufen. Die Führungsrohre drehen sich nicht. Die stangenförmigen Werkstücke hingegen drehen sich mit den Arbeitsspindeln. Dadurch dreht sich auch der in den Führungsrohren befindliche Längenabschnitt der Werkstücke gegenüber den Führungsrohren. Damit bei dieser Relativbewegung der Abrieb sowohl der Werkstücke wie auch der Führungsrohre nicht zu groß wird und außerdem die Lärmentwicklung möglichst gering gerhalten wird, werden die Führungsrohre von einer Dämpfungsflüssigkeit mit Schmiereigenschaften durchströmt. Diese Dämpfungsflüssigkeit müß jedem der Führungsrohre am rückwärtigen Ende einzeln zugeführt werden.

Die DE-U-88 14 860.2 offenbart eine Zuführvorrichtung gemäß dem Oberbegriff des Anspruchs 1. Bei dieser Zuführvorrichtung werden das hintere Ende der Führungsrohre an einer gemeinsamen Haltescheibe befestigt. Diese Haltescheibe weist für die Aufnahme und Halterung der Führungsrohre je ein axiales Durchgangsloch auf. Die Haltescheibe ist mittels eines Drehlagers um die zentrale Achse der Spindeltrommel drehbar gelagert, mit der sie bei jedem Stationenwechsel der Werkstücke in Umfangsrichtung um eine bestimmte Umfangsstrecke umläuft. Das Drehlager für die Haltescheibe wird von einem Traggestell aufgenommen.

Für das Zuführen der Dämpfungsflüssigkeit von einer gemeinsamen Zuführleitung zu den einzelnen Führungsrohren weist sowohl das Traggestell, wie auch die Tragscheibe je eine kreiszylindrische Umfangsfläche auf, die bei beiden Teilen aufeinander abgestimmt sind. Im gemeinsamen Axialbereich dieser Umfangsflächen ist an einer der beiden Teile eine umlaufende Verteilernut vorhanden. In axialer Richtung beiderseits der Verteilernut sind Dichtungen vorhanden, die den Rinspalt zwischen den beiden Umfangsflächen nach außen hin abdichten. Innerhalb der Haltescheibe sind mehr oder weniger radial ausgerichtete Verbindungskanäle vorhanden, von denen je einer von der Verteilernut aus sich bis zu einem der Verbindungsrohre hin erstreckt. Im Mündungsbereich eines solchen Verbindungskanals ist das Führungsrohr mit wenigstens einem radialen Durchgangsloch versehen. Jedes der Führungsrohre ist an seinem Ende mit je einer Verschlußkappe verschlossen, die entweder mit dem Führungsrohr selbst oder in der Umgebung des Führungsrohres mit der Haltescheibe gekoppelt wird.

Bei dieser Vorrichtung ist eine Abdichtung der Verteilernut in beiden axialen Richtungen erforderlich. Die beiden zusammenwirkenden zylindrischen Umfangsflächen haben einen verhältnismäßig großen Durchmesser. Daher haben auch die dort verwendeten Dichtungselemente einen verhältnismäßig großen Außerdurchmesser. Daher sind sie sehr teuer. Da die beiden kreiszylindrischen Umfangsflächen zugleich als Lagerflächen zwischen der Haltescheibe und dem Traggestell dienen und die Haltescheibe unter ihrem Eigengewicht und dem Gewicht der Führungsrohre sich innerhalb des Lagerspiels im unteren Bereich der Lagerflächen absetzt, werden dort auch die Dichtungselemente stärker beansprucht.

Bei dieser Vorrichtung ist außerdem von Nachteil, daß die Verschlußkappen an der Haltescheibe bei einem Werkstückwechsel einzeln abgenommen werden müssen, damit ein neues Werkstück eingeführt werden kann. Außerdem stehen diese Verschlußkappen in axialer Richtung über die Stirnfläche der Haltescheibe nach außen über. Da die Haltescheibe mit der Spindeltrommel abschnittweise umläuft, laufen auch die Verschlußkappen um, wenn die Spindeltrommel sich dreht. Das bedeutet eine nicht unerhebliche Verletzungsgefahr für das Bedienungspersonal, wenn dieses sich zufällig in der Nähe der Hatescheibe aufhält, wobei erschwerden hinzukommt, daß gerade im Bereich des hinteren Endes der Führungsrohre häufig die Platzverhältnisse sehr beengt sind und das Bedienungspersonal nur wenig Bewegungsraum hat.

Die in Anspruch 1 angegebenen Merkmale lösen die Aufgabe, eine Zuführvorrichtung für die Dämpfungsflüssigkeit in Führungsrohren bei Mehrspindel-Drehmaschinen und dergleichen zu schaffen, bei der die Unfallgefahr verringert ist und das Beladen der Führungsrohre erleichtert ist.

Die Verschlußscheibe deckt die Haltescheibe an ihrem rückwärtigen Ende vollständig ab. Da die Verschlußscheibe stillsteht, auch wenn die Spindeltrommel sich dreht, sind keinerlei außenliegende Teile vorhanden, die eine Drehbewegung ausführen. Damit ist jede Verletzungsgefahr durch rotierende Teile für das Bedienungspersonal ausgeschlossen.

Für das Nachladen der Werkstücke wird entweder die Verschlußscheibe als Ganzes abgenommen oder es wird von ihr ein deckelartiger Teil abgenommen, während der Teil mit der Dichtung gegenüber der Haltescheibe an Ort und Stelle bleibt. Bei abgenommener Dichtungsscheibe oder bei abgenommenem Deckel sind die Führungsrohre für das Nachladen frei zugänglich.

Bei einer Ausgestaltung der Zuführvorrichtung nach Anspruch 2 muß nicht mehr die ganze Verschlußscheibe oder ein Deckelteil größerer Amessung abgenommen werden, sondern lediglich die Verschlußglieder, deren Abmessungen nur wenig größer als die Durchgangslöcher in den Führungsrohren sind.

Selbst wenn diese Verschlußglieder oder die zu ihrer Befestigung an der Verschlußscheibe dienenden Befestigungselemente über die hintere Stirnseite der Verschlußscheibe überstehen sollten, besteht dennoch keine Verletzungsgefahr, da auch diese Verschlußglieder mit der Verschlußscheibe stillstehen.

Bei einer Ausgestaltung der Zuführvorrichtung nach Anspruch 3 kann das Öffnen und Verschließen der Verschlußglieder mechanisch erfolgen. Die Öffnungs- und Schließbewegungen können sogar automatisiert werden. Das eröffnet die Möglichkeit des Einsatzes einer automatischen Beladevorrichtung für die stangenförmigen Werkstücke.

Bei einer Ausgestaltung der Zuführvorrichtung nach Anspruch 4 wird für das Hahnkücken als Verschlußorgan kein besonderer Betätigungsraum benötigt, weil das Hahnkücken nur um seine eigene Achse gedreht wird. Bei einer Weiterbildung dieser Zuführvorrichtung nach Anspruch 5 kann man einzelne Dichtungsringe verwenden, um das kugelige Hahnkücken gegenüber dem Hahngehäuse abzudichten. Diese Dichtungsringe können im Bedarfsfalle ausgetauscht werden.

Mit einer Ausgestaltung der Zuführvorrichtung nach Anspruch 6 kann das Beladen mit neuen Werkstücken wiederum automatisiert werden und dafür eine automatische Beladevorrichtung eingesetzt werden.

Bei einer Ausgestaltung der Zuführvorrichtung nach Anspruch 7 wird erreicht, daß das in der Beladestation der Drehstellung der Spindeltrommel befindliche Führungsrohr von dem Verteilerkanal abgesperrt ist. Beim Beladen dieses einen Führungsrohres können daher der Verteilerkanal und die daran angeschlossenen übrigen Führungsrohre mit der Dämpfungsflüssigkeit gefüllt bleiben. In der Dämpfungsflüssigkeit kann sogar der normale Förderdruck aufrecht erhalten werden, ohne daß die Dämpfungsflüssigkeit bei dem zum Beladen offenen Führungsrohr austreten könnte. Bei einer Weiterbildung dieser Zuführvorrichtung nach Anspruch 8 kann auch das in der Ladestation befindliche Führungsrohr sofort wieder mit Dämpfungsflüssigkeit gefüllt werden, obwohl es durch die Absperrvorrichtung von dem normalen Verteilerkanal getrennt ist.

Bei einer nach Anspruch 9 ausgestalteten Zuführvorrichtung kann das in der Beladestation stehende Führungsrohr beladen werden, ohne daß zuvor dieses Führungsrohr geleert werden muß. Dafür wird das neue Werkstück zunächst in die Dichtungsvorrichtung eingeführt, ehe das Verschlußglied, insbesondere der Hahn, geöffnet wird. Nach dem Öffnen des Hahns kann das Werkstück durch das Hahnkücken hindurch eingeschoben werden, wobei die Dichtungsvorrichtung das Austreten der Dämpfungsflüssigkeit nach außen verhindert. Sobald das Ende des Werkstückes den Hahn passiert hat, wird dieser wieder geschlossen. Wenn eine solche Dichtungsvorrichtung auch auf der anderen Seite des Hahns angeordnet wird, kann der Hahn geschlossen werden, wenn das Ende des Werkstückes sich noch im Bereich der zweiten Dichtungsvorrichtung befindet. Dadurch wird die ohnehin schon geringe Austrittsmenge der Dämpfungsflüssigkeiten noch weiter verringert. Bei einer Weiterbildung der Zuführvorrichtung nach Anspruch 10 wird die Dichtwirkung der einen oder der beiden Dichtungsvorrichtungen noch gesteigert.

Im folgenden wird die Erfindung anhand einiger in der Zeichnung dargestellter Ausführungsbeispiele näher erläutert. Es zeigen:
- Fig. 1: eine perspektivische Ansicht einer Mehrspindel-Drehmaschine für Stangenbearbeitung mit einer Anzahl Führungsrohre für die Werkstücke und mit einer Zuführvorrichtung für die Dämpfungsflüssigkeit am rückwärtigen Ende der Führungsrohre;
- Fig. 2: eine Rückansicht der Zuführvorrichtung nach Fig. 1;
- Fig. 3: einen ausschnittweise dargestellten Horizontalschnitt der Zuführvorrichtung nach Fig. 1 und 2;
- Fig. 4: teils eine Draufsicht und teils einen Horizontalschnitt eines abgewandelten Ausführungsbeispieles der Zuführvorrichtung;
- Fig. 5: einen Ausschnitt aus dem Horizontalschnitt von Fig. 4 mit einer anderen Betriebsstellung eines der Teile;
- Fig. 6: einen ausschnittweise dargestellten Horizontalschnitt eines Teils eines weiteren Ausführungsbeispieles der Zuführvorrichtung.

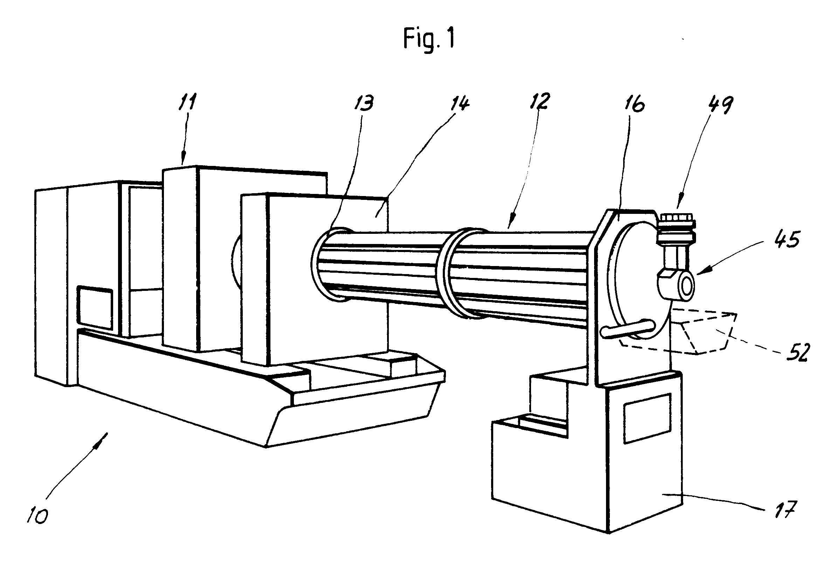

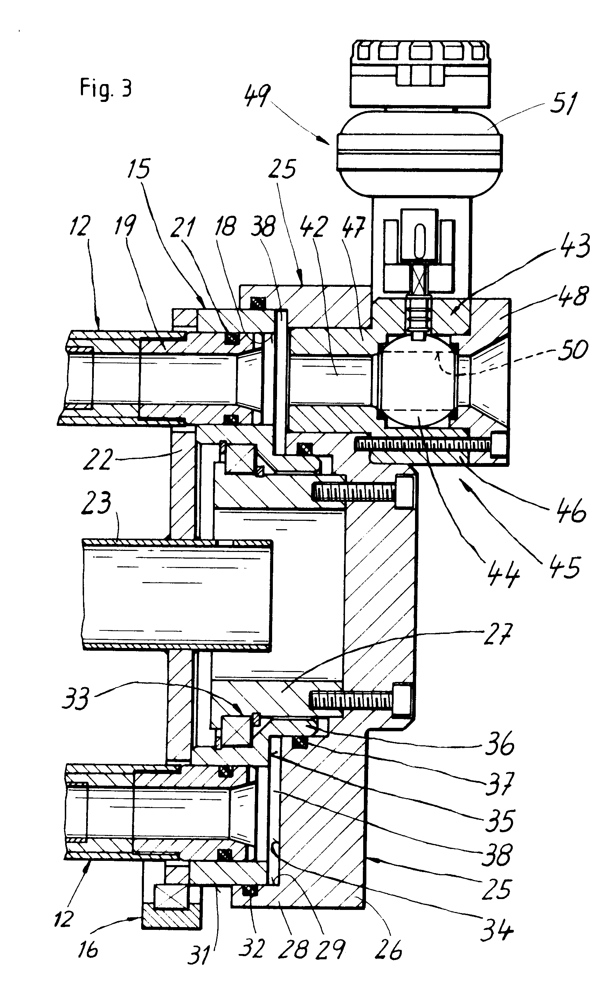

Bei der aus Fig. 1 ersichtlichen Mehrspindel-Drehmaschine 10 erstrecken sich von der Spindeltrommel 11 aus eine Anzahl Führungsrohre 12 nach hinten, in denen die stangenförmigen Werkstücke untergebracht sind, die von der Drehmaschine bearbeitet werden. Die Führungsrohre 12 werden an ihrem der Spindeltrommel 11 zugekehrten vorderen Ende von einer Haltescheibe 13 gehalten, die in einem vorderen Traggestell 14 drehbar gelagert ist. An ihrem hinteren Ende werden die Führungsrohre 12 von einer hinteren Haltescheibe 15 (Fig. 3) gehalten, die in einem hinteren Traggestell 16 drehbar gelagert ist. Das Traggestell 16 sitzt auf einem Grundgestell 17 in dem unter anderem eine Pumpe für die Förderung einer Dämpfungsflüssigkeit für die Werkstücke in den Führungsrohren 12 untergebracht ist.

Die Haltescheibe 15 weist für jedes Führungsrohr 12 je ein Durchgangsloch 18 auf, in das ein mit dem Führungsrohr 12 verschraubter Aufnahmekopf 19 eingesteckt ist. Dieser Aufnahmekopf 19 und damit das Führungsrohr 12 sind gegenüber der Haltescheibe 15 mittels eines Dichtungsringes 21 abgedichtet, der in eine Umfangsnut des Aufnahmekopfes 19 eingelegt ist.

Auf der der Drehmaschine zugekehrten Seite der Haltescheibe 15 ist eine Mitnehmerscheibe 22 angeordnet, die in ihrer Mitte mit einem Mitnehmerrohr 23 verschweißt ist. Das Mitnehmerrohr 23 erstreckt sich bis zur vorderen Haltescheibe hin mit der es drehfest verbunden ist. Dadurch sorgt es dafür, daß bei einer schrittweisen Umlaufbewegung der Spindeltrommel und der vorderen Haltescheibe auch die hintere Haltescheibe 15 in gleichem Maße mitgenommen wird, ohne daß dabei die verhältnismäßig langen Führungsrohre 12 schraubenförmig verwunden werden. Die Mitnehmerscheibe 22 ist mit der Haltescheibe 15 verschraubt.

Die hintere Stirnseite der Haltescheibe 15 wird durch eine Verschlußscheibe 25 abgedeckt und verschlossen. Die Verschlußscheibe 25 ist zur Erleichterung ihrer Fertigung und ihrer Montage zweiteilig ausgebildet. Der äußere Scheibenteil 26 und der innere Scheibenteil 27 sind miteinander verschraubt.

Die Verschlußscheibe 25 weist am äußeren Scheibenteil 26 einen ringförmigen Kragen 28 auf, dessen innere Umfangsfläche 29 auf die äußere Umfangsfläche 31 der Haltescheibe 15 abgestimmt ist. Im Bereich des zylindrischen Kragens 28 ist eine Umfangsnut vorhanden, in die ein Dichtungsring 32 eingelegt ist, der für eine ausreichende Dichtung zwischen der Haltescheibe 15 und der Verschlußscheibe 25 sorgt.

Die Haltescheibe 15 läuft mit der Spindeltrommel der Drehmaschine abschnittweise um. Die Verschlußscheibe 25 ist in nicht dargestellter Weise mit dem Traggestell 16 zumindest drehfest gekoppelt, so daß sie stillsteht.

Damit der zwischen diesen beiden Scheiben wirkende Dichtungsring 32 in radialer Richtung entlastet wird und er keine Führungsaufgaben erfüllen muß, sondern nur dichten muß, ist zwischen der Haltescheibe 15 und dem inneren Scheibenteil 27 ein Wälzlager 33 angeordnet. Durch Absätze und Sicherungsringe vermag es neben den radialen Führungskräften auch axiale Führungskräfte aufzunehmen, so daß zwischen der Verschlußscheibe 25 und der Haltescheibe 15 stets die gleiche axiale Zuordnung bestehen bleibt.

Wie aus Fig. 3 ersichtlich ist, hat die Verschlußscheibe 25 einen kreisringförmigen Stirnflächenabschnitt 34, der von dem ihm im selben Radialbereich gegenüberstehenden Stirnflächenabschnitt 35 der Haltescheibe 15 einen bestimmten axialen Abstand hat. Am innengelegenen Rand des Stirnflächenabschnittes 35 hat die Haltescheibe 15 einen kreisringförmigen Kragen 36, der auf einen Absatz der Verschlußscheibe 25 abgestimmt ist. An diesem Absatz der Verschlußscheibe 25 ist ein Dichtungsring 37 in eine Umfangsnut der Verschlußscheibe 25 eingelegt. Auf diese Weise wird ein Ringraum geschaffen, der in axialer Richtung von dem Stirnflächenabschnitt 34 der Verschlußscheibe 25 und von dem Stirnflächenabschnitt 35 der Haltescheibe 15 begrenzt wird und der in radialer Richtung von dem Kragen 28 der Verschlußscheibe 25 und von dem Kragen 36 der Haltescheibe 15 begrenzt wird. Dieser Ringraum bildet einen Verteilerkanal 38 für alle Führungsrohre 12, die mit ihrem Innenraum in diesen Verteilerkanal 38 münden.

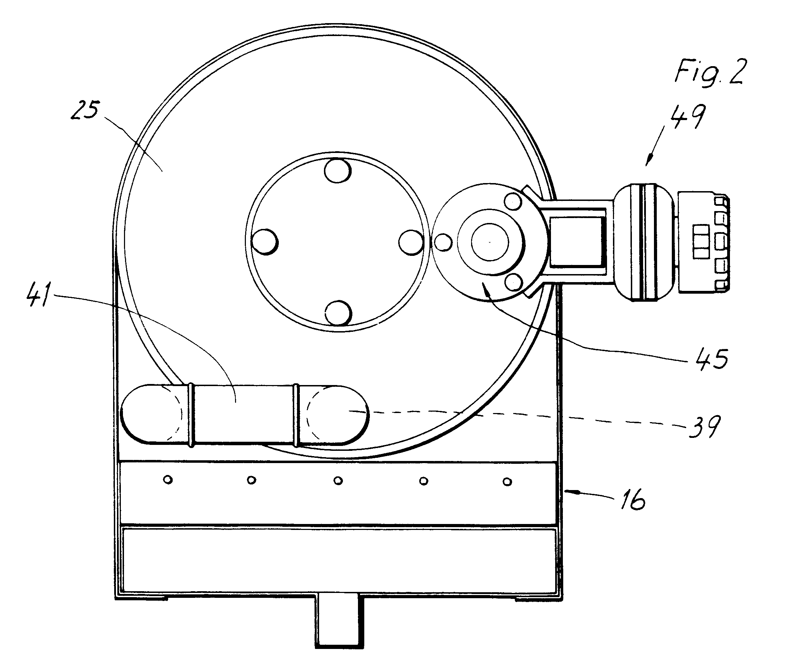

Im Radialbereich des Verteilerkanals 39 ist in der Verschlußscheibe 25 ein Durchgangsloch 39 vorhanden (Fig. 2), an das auf der Außenseite der Verschlußscheibe 25 eine Zuführleitung 41 für die Dämpfungsflüssigkeit angeschlossen ist, die von einer im Grundgestell 17 untergebrachten Förderpumpe herangefördert wird.

Zum Beladen der Führungsrohre 12 ist in der Verschlußscheibe 25 ein Durchgangsloch 42 vorhanden (Fig. 3), das in der Fluchtlinie des Teilkreises der Achsen der Führungsrohre 12 und damit in der Fluchtlinie eines der Führungsrohre 12 gelegen ist. Dieses Durchgangsloch 42 dient als Beladeöffnung. Es hat daher eine lichte Weite, die mindestens gleich der größten lichten Weite der Führungsrohre 12 und ihrer Aufnahmeköpfe 19 ist. Da die Vorschubeinrichtung der Drehmaschine (von hinten betrachtet) üblicherweise in der 3-Uhr-Position der Bearbeitungsstationen angeordnet ist, ist auch die Beladeöffnung 42 in dieser Umfangsstellung der Verschlußscheibe 25 gelegen.

Da das als Beladeöffnung dienende Durchgangsloch 42 auch in den Verteilerkanal 38 mündet, ist ein Verschlußglied 43 vorhanden, durch das das Durchgangsloch 42 nach außen verschließbar ist. Dieses Verschlußglied 43 wird durch das kugelige Hahnkücken 44 eines Kugelhahnes 45 gebildet. In Fig. 3 ist das Hahnkücken 44 der besseren Übersichtlichkeit wegen in seiner Offenstellung oder Durchgangsstellung dargestellt, auf die es beim Beladen des dahinter liegenden Führungsrohres 12 eingestellt wird.

Das Hahngehäuse 46 weist einen kreisringzylindrischen Führungsabsatz 47 auf, der in das auf seinen Außendurchmesser erweiterte Durchgangsloch 42 in der Verschlußscheibe 25 eingesetzt ist. Ein nicht dargestellter Dichtungsring sorgt für eine ausreichende Abdichtung zwischen dem Hahngehäuse 46 und der Verschlußscheibe 25.

Auf der Außenseite des Hahngehäuses 46 ist ein Einführtrichter 48 befestigt, der das Einführen der stangenförmigen Werkstücke in das Durchgangsloch des Hahnkückens 44 erleichtert.

Der Kugelhahn 45 weist in herkömmlicher Weise eine Betätigungsvorrichtung 49 mit einem Kraftantrieb 51 auf, der hier als pneumatischer Kraftantrieb ausgebildet ist.

Wie aus Fig. 1 ersichtlich ist, ist unterhalb der Verschlußscheibe, und zwar insbesondere unterhalb des Kugelhahns 45, eine Auffangwanne 52 angeordnet, in der die Dämpfungsflüssigkeit aufgefangen wird, die beim Beladen eines Führungsrohres aus dem dann geöffneten Kugelhahn 45 austritt.

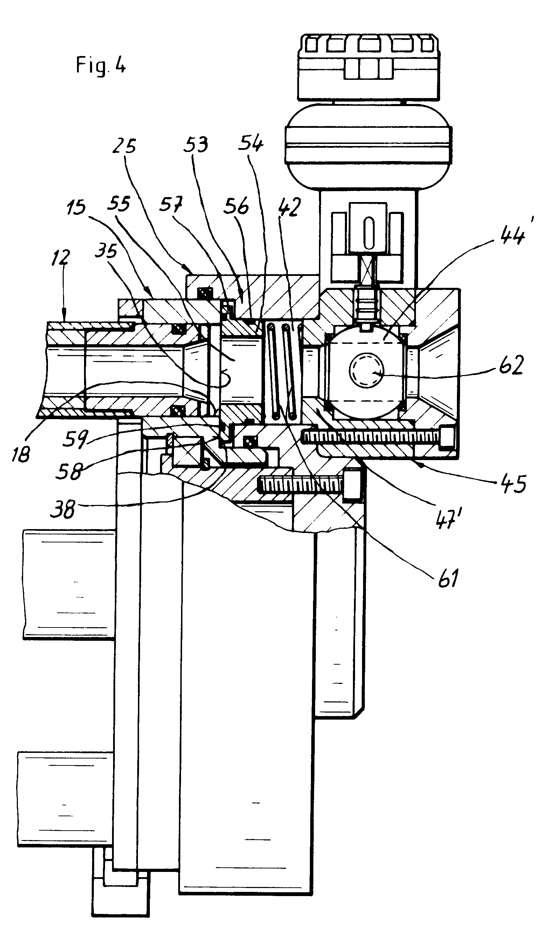

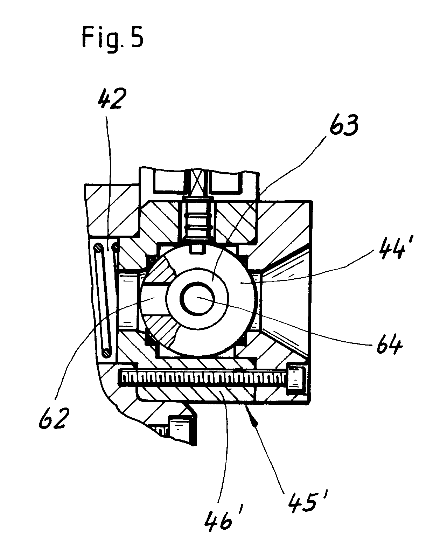

Aus Fig. 4 und Fig. 5 ist eine im Bereich der Beladeöffnung 42 abgewandelte Ausführungsform der Zuführvorrichtung zu ersehen, bei der bei einem Werkstückwechsel nicht mehr alle Führungsrohre 12 entleert werden müssen, sondern nur noch dasjenige Führungsrohr, das in der Beladestation steht, und zwar auch dann nur, wenn es beladen werden soll. Soweit die Teile dieser Ausführungsform gegenüber der bisher erläuterten Form abgewandelt sind, sind die betreffenden Bezugszeichen mit einen Apostroph versehen.

Am Kugelhahn 45' ist der Führungsansatz 47' sehr stark verkürzt. In das damit in seiner vollen lichten Weite zur Verfügung stehende Durchgangsloch 42 der Verschlußscheibe 25 ist eine Absperrvorrichtung 53 eingesetzt. Diese weist ein kreisringförmiges Absperrglied 54 auf. Dieses hat ein axiales Durchgangsloch 55, dessen lichte Weite mindestens gleich der lichten Weite der übrigen Durchgangsöffnungen ist. In der äußeren Umfangsfläche des Absperrgliedes 54, die auf die innere Umfangsfläche des Durchgangsloches 42 abgestimmt ist, ist eine Umfangsnut vorhanden, in die ein Dichtungsring 56 eingesetzt ist. An dem der Haltescheibe 15 zugekehrten Ende weist das Absperrglied 54 einen kreisringförmigen Bund 57 auf, in dessen ringförmiger Stirnfläche 58 ist eine umlaufende Nut vorhanden, in die ein Dichtungsring 59 eingesetzt ist. Die Stirnfläche 58 liegt an dem Stirnflächenabschnitt 35 der Haltescheibe 15 an, die auf der der Drehmaschine zugekehrten Seite den Verteilerkanal 38 begrenzt. Die Stirnfläche 58 des Absperrgliedes 54 hat einen größeren Durchmesser als das Durchgangsloch 18 in der Haltescheibe 15, in die das Führungsrohr 12 eingesteckt ist. Auch der Dichtungsring 59 in der Stirnfläche 58 hat einen größeren Durchmesser. Dadurch wird das in der Fluchtlinie der Absperrvorrichtung 53 gelegene Durchgangsloch 18 der Haltescheibe 15 gegenüber dem Verteilerkanal 38 abgesperrt.

Damit die Absperrvorrichtung 53 stets wirksam ist, ist zwischen dem Absperrglied 54 und dem Führungsansatz 47' des Kugelhahns 45 eine Schraubendruckfeder 61 eingefügt, die das Absperrglied 54 am Stirnflächenabschnitt 35 andrückt.

Da bei der Drehmaschine auch in der Vorschubstation außerhalb einer Vorschubbewegung eine Bearbeitung der Werkstücke stattfindet und sich daher in dem betreffenden Führungsrohr 12 ein stangenförmiges Werkstück befindet, muß auch diesem Führungsrohr 12 Dämpfungsflüssigkeit zugeführt werden. Da das nicht vom Verteilerkanal 38 aus möglich ist, ist beim Kugelhahn 45 das kugelige Hahnkücken 44' in einer seiner kugeligen Dichtflächen mit einem zusätzlichen Durchgangsloch 62 versehen, das in das Hauptdurchgangsloch 63 des Hahnkückens 44' mündet.

Am Hahngehäuse 46' ist auf der einen Seite ein Durchgangsloch 64 vorhanden, dessen Achse mit dem Kugelmittelpunkt des Hahnkückens 44' fluchtet und rechtwinklig zur Fluchtlinie der Beladeöffnung 42 ausgerichtet ist. An dieses Durchgangsloch 64 ist auf der Außenseite des Hahngehäuses 46' eine Verbindungsleitung angeschlossen, die ihrerseits an die Hauptzuführleitung 41 angeschlossen ist. Auf diese Weise kann die Dämpfungsflüssigkeit von der Zuführleitung 41 durch das Durchgangsloch 64 im Hahngehäuse 46' bis in den Innenraum des Hahnkückens 44' und von dort über das Durchgangsloch 62 zur Beladeöffnung 42 und von dort aus bis in das Führungsrohr 12 gelangen, obwohl dieses Führungsrohr 12 gegenüber dem Verteilerkanal 38 in der Haltescheibe 15 abgesperrt ist.

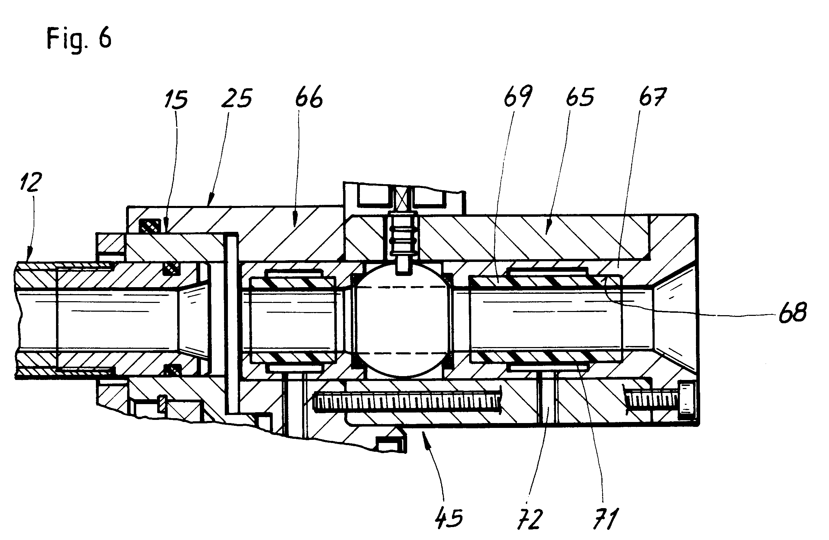

Durch die zuvor erläuterte Absperrvorrichtung 53 wird zwar das in der betreffenden Position stehende Führungsrohr 12 vom Verteilerrohr 38 abgesperrt. Während des Beladevorganges ist dieses Führungsrohr 12 bei geöffnetem Kugelhahn 45 jedoch nach außen völlig offen. Um auch in diesem Falle das Ausfließen der Dämpfungsflüssigkeit zu verhindern, können die anhand Fig. 6 erläuterten Abdichtvorrichtungen 65 und 66 eingesetzt werden. Diese werden vor und hinter dem Kugelhahn 45 eingefügt. Die Absperrvorrichtung 53 kann hierbei entfallen.

Bei der Abdichtvorrichtung 65 ist in einem hülsenförmigen Gehäuse 67 auf der Innenseite eine kreisringzylindrische Ausnehmung 68 vorhanden. Darin ist ein schlauchförmiges Abdichtglied 69 eingefügt, das im Bereich seiner beiden Endabschnitte mit dem Gehäuse 67 dicht verklebt ist. Das Abdichtglied 69 ist aus einem elastomeren Werkstoff mit sehr hoher Abriebfestigkeit hergestellt.

Im mittleren Längenabschnitt des Abdichtgliedes 69 ist im Gehäuse 67 eine kreisringzylindrische Ausnehmung 71 vorhanden. Darin mündet eine radial ausgerichtete Zuleitung 72, an die außerhalb des Gehäuses 67 eine Verbindungsleitung für ein Fluid angeschlossen ist, das mittels eines nicht dargestellten Druckerzeugers unter einen bestimmten Betriebsdruck gesetzt werden kann.

Die Abdichtvorrichtung 66 ist grundsätzlich gleich der Abdichtvorrichtung 65 aufgebaut, wobei sie wegen der beengten Platzverhältnisse im allgemeinen in axialer Richtung kürzer ausgeführt ist.

Das Beladen des Führungsrohres 12 in der Beladestation geht so vor sich, daß bei geschlossenem Kugelhahn 45 ein stangenförmiges Werkzeug bis in die Abdichtvorrichtung 65 hinein eingeschoben wird. Sofern das Abdichtglied 69 nicht bereits aufgrund seiner elastischen Eigenschaften am Werkstück ringsum dichtend anliegt, wird über die Zuleitung 72 das Fluid in der Ausnehmung 71 unter Druck gesetzt, so daß der mittlere Längenabschnitt des Abdichtgliedes 69 sich am Werkstück dichtend anlegt. Danach wird der Kugelhahn 45 geöffent und das Werkstück durch ihn hindurch und durch die zweite Abichtvorrichtung 66 hindurch bis in das Führungsrohr 12 hinein eingeschoben. Spätestens dann wenn das hintere Ende des Werkstückes im Bereich der ersten Abdichtvorrichtung 65 angelangt ist, wird auch die zweite Abdichtvorrichtung 66 mit Druck beaufschlagt, so daß ihr Abdichtglied sich ebenfalls am Werkstück dichtend anlegt. Wenn das hintere Ende des Werkstückes aus dem Kugelhahn 45 ausgetreten ist, sich aber noch in der zweiten Abdichtvorrichtung 66 befindet, wird der Kugelhahn 45 geschlossen. Beim weiteren Vorschieben des Werkstückes mit Hilfe der Vorschubvorrichtung der Drehmaschine kann dann keine Dämpfungsflüssigkeit mehr austreten.

Sofern aus Platzgründen die zweite Abdichtvorrichtung 66 nicht untergebracht werden kann, kann das Austreten der Dämpfungsflüssigkeit auch dadurch weitgehend vermieden werden, daß beim Einschieben des Werkstückes ein Einschiebeglied verwendet wird, das die gleiche Querschnittsform wie das Werkstück hat. Mit diesem Einschiebeglied wird das Werkstück bis über den Kugelhahn 45 hinaus eingeschoben. Danach wird das Einführglied so weit zurückgezogen, daß der Kugelhahn geschlossen werden kann. Erst danach wird das Einschiebeglied aus der Abdichtvorrichtung 65 herausgezogen.

Wenn die Abdichtvorrichtung 65 ohne die kreisrinzylindrische Ausnehmung 71 und ohne die Zuleitung 72 für das Fluid ausgeführt werden soll, ist es zweckmäßig, das Abdichtglied 69 zumindest in einem bestimmten Längenabschnitt mit einem geringen Untermaß gegenüber der Aufrißprojektion der Werkstücke herzustellen. Bei der zuvor geschilderten Ausführungsform der Abdichtvorrichtung 65 bei der das Abdichtglied 69 mit einem Fluid beaufschlagt wird, kann dieses Abdichtglied ein geringes Übermaß gegenüber der Aufrißprojektion der Werkstücke haben, da dieses Übermaß durch die Beaufschlagung mit dem Fluid durch die dabei erfolgende elastische Verformung des Abdichtgliedes 69 überbrückt wird.

## Patentansprüche

1. Zuführvorrichtung für die Dämpfungsflüssigkeit in Führungsrohren bei Mehrspindel-Drehmaschinen und dergleichen
mit den Merkmalen:
- das von der Spindeltrommel (11) der Drehmaschine (10) abgekehrte Ende der Führungsrohre (12) ist an einer gemeinsamen Haltescheibe (15) befestigt,
- die Haltescheibe weist für die Aufnahme und Halterung je eines der Führungsrohre (12) je ein axiales Durchgangsloch (18) auf,
- die Führungsrohre (12) weisen an dem von der Spindeltrommel (11) abgekehrten Ende Verschlußelemente und Dichtungen auf,
- die Haltescheibe (15) ist mittels eines Drehlagers um die zentrale Achse der Spindeltrommel (11) drehbar gelagert,
- es ist ein Traggestell (16) vorhanden, das das Drehlager für die Haltescheibe (15) aufnimmt,
- jedes Führungsrohr (12) ist über eine Verbindungsleitung mit einer gemeinsamen Zuführleitung (41) für die Dämpfungsflüssigkeit verbunden,
**gekennzeichnet** durch die Merkmale:
- als Verschlußelement ist an der von der Spindeltrommel (11) abgekehrten Seite der Haltescheibe (15) eine Verschlußscheibe (25) angeordnet, die die Haltescheibe (15) mindestens bis zu einem Durchmesserbereich abdeckt, innerhalb dessen die Führungsrohre (12) gelegen sind,
- die Verschlußscheibe (25) ist mit dem Traggestell (16) zumindest drehfest gekoppelt,
- die Dichtung ist zwischen der Haltescheibe (15) und der Verschlußscheibe (25) angebracht, so daß die hintere Stirnseite (35) der Haltescheibe (15) mit den Durchgangslöchern (18) für die Führungsrohre (12) nach außen hin abgedichtet wird,
- zwischen der Haltescheibe (15) und der Verschlußscheibe (25) ist die Verbindungsleitung als Verteilerkanal (38) für die Dämpfungsflüssigkeit ausgebildet, mit dem die Öffnungen der Führungsrohre (12) in Verbindung stehen,
- an der Verschlußscheibe (25) ist ein Durchgangsloch (39) vorhanden, an das einerseits die Zuführleitung (41) für die Dämpfungsflüssigkeit angeschlossen ist und das andererseits mit dem Verteilerkanal (38) in Verbindung steht.

2. Zuführvorrichtung nach Anspruch 1, **gekennzeichnet** durch die Merkmale:
- die Verschlußscheibe weist ein Durchgangsloch oder mehrere Durchgangslöcher auf, das bzw. die in der Fluchtlinie des Innenraumes der Führungsrohre gelegen ist bzw. sind und dessen bzw. deren lichte Weite mindestens gleich der größten Außenabmessung der stangenförmigen Werkstücke ist,
- jedes dieser Durchgangslöcher ist mitttels eines Verschlußgliedes verschließbar.

3. Zuführvorrichtung nach Anspruch 2, **gekennzeichnet** durch die Merkmale:
- jedes Verschlußglied ist mittels einer Führung relativ zur Verschlußscheibe zwischen einer Schließstellung und einer Freigabestellung bewegbar geführt,
- es ist eine Betätigungsvorrichtung vorhanden, mittels der das Verschlußglied einmal in die Schließstellung und einmal in die Freigabestellung bewegbar ist.

4. Zuführvorrichtung nach Anspruch 1, **gekennzeichnet** durch die Merkmale:
- die Verschlußscheibe (25) weist wenigstens ein Durchgangsloch (42) auf, das in der Fluchtlinie eines der Führungsrohre (12) gelegen ist und das eine lichte Weite hat, die mindestens gleich der größten Außenabmessung der Werkstücke ist,
- in der Fluchtlinie des Durchgangsloches (42) ist ein Hahn (45) vorhanden, dessen Hahnrücken (44) ein quer zu seiner Drehachse verlaufendes Durchgangsloch (50) aufweist, dessen lichte Weite mindestens gleich der größten Außenabmessung der Werkstücke ist.

5. Zuführvorrichtung nach Anspruch 4, **gekennzeichnet** durch das Merkmal:
- der Hahn (45) ist als Kugelhahn ausgebildet.

6. Zuführvorrichtung nach Anspruch 4 oder 5, **gekennzeichnet** durch das Merkmal:
- für den Hahn (45) ist eine Betätigungsvorrichtung (49) vorhanden, die bevorzugt mit einem Kraftantrieb (51) gekoppelt ist.

7. Zuführvorrichtung nach einem der Ansprüche 1 bis 6, **gekennzeichnet** durch die Merkmale:
- die Verschlußscheibe (25) ist im Bereich ihres Durchgangsloches (42) für die Werkstücke auf der der Haltescheibe (15) zugekehrten Seite mit einer Absperrvorrichtung (53) versehen,
-- die ein mit dem Durchgangsloch (42) in der Verschlußscheibe (25) fluchtendes Durchgangsloch (55) aufweist, dessen lichte Weite mindestens gleich der größten Außenabmessung der Werkstücke ist,
-- die einerseits an der Verschlußscheibe (25) dicht angeschlossen ist, und
-- die andererseits in der Umgebung eines der Durchgangslöcher (18) mit einem Führungsrohr (12) an der Haltescheibe (15) dicht anliegt und dieses Durchgangsloch (18) mit dem Führungsrohr (12) vom Verteilerkanal (38) für die Dämpfungsflüssigkeit absperrt,
- das Durchgangsloch (42) in der Verschlußscheibe (25) ist zwischen der Absperrvorrichtung (53) und dem Verschlußorgan (45) für das Durchgangsloch (42) der Verschlußscheibe (25) mit der Zuführleitung (41) für die Dämpfungsflüssigkeit verbindbar.

8. Zuführvorrichtung nach Anspruch 7, mit einem betätigbaren Verschlußorgan für das Durchgangsloch in der Verschlußscheibe, insbesondere in Form eines Hahns, **gekennzeichnet** durch die Merkmale:
- die Verbindung mit der Zuführleitung (41; 64) für die Dämpfungsflüssigkeit erfolgt durch das Verschlußorgan (44') hindurch,
- soweit erforderlich ist das Verschlußorgan (44') mit einer zusätzlichen Öffnung (62) versehen, an die die Zuführleitung (41) angeschlossen ist.

9. Zuführvorrichtung nach einem der Ansprüche 4 bis 8, **gekennzeichnet** durch die Merkmale:
- an der Verschlußscheibe (25) ist in der Fluchtlinie ihres Durchgangsloches (42) in axialer Richtung außerhalb des Verschlußorgans (45), eine Abdichtvorrichtung (65) mit einem Durchgangsloch vorhanden, dessen Durchlaßquerschnitt auf die Axialprojektion der Werkstücke abgestimmt ist,
- die Abdichtvorrichtung (65; 66) weist ein Abdichtglied (69) auf, das zumindest in radialer Richtung elastisch ausgebildet ist, wobei es im ungespannten Zustand gegenüber der Axialprojektion der Werkstücke ein geringes Untermaß aufweist.

10. Zuführvorrichtung nach Anspruch 9, **gekennzeichnet** durch das Merkmal:
- an der äußeren Umfangsfläche des Abdichtgliedes (69) ist ein Ringkanal (71) vorhanden, in den über eine steuerbare Zuleitung (72) ein Fluid einführbar ist und mit einem gewissen Überdruck beaufschlagbar ist.

## Claims

1. Feed device for the damping fluid in guide tubes in multiple-spindle lathes and the like, having the features:
- the ends of the guide tubes (12) facing away from the spindle drum (11) of the lathe (10) are fixed on a common holding disc (15),
- the holding disc has an axial through bore (18) for receiving and holding each of the guide tubes (12),
- on the ends facing away from the spindle drum (119) the guide tubes (12) have closure elements and seals,
- the holding disc (15) is mounted by means of a pivot bearing so as to be rotatable about the central axis of the spindle drum (11),
- a supporting frame (16) is provided which receives the pivot bearing for the holding disc (15),
- each guide tube (12) is connected by a connecting pipe to a common feed pipe (41) for the damping fluid,
characterised by the features:
- a closure disc (25) is arranged as a closure element on the side of the holding disc (15) facing away from the spindle drum (11), this closure disc covering the holding disc (15) at least to an area of the diameter within which the guide tubes (12) are located,
- the closure disc (25) is coupled to the supporting frame (16) at least so as to be fixed against rotation,
- the seal is placed between the holding disc (15) and the closure disc (25) so that the rear face (35) of the holding disc (15) with the through bores (18) for the guide tubes (12) is sealed towards the exterior,
- between the holding disc (15) and the closure disc (25) the connecting pipe is constructed as a distributor duct (38) for the damping fluid with which the openings in the guide tubes (12) communicate,
- on the closure disc (25) a through bore (39) is provided to which on the one hand the feed pipe (41) for the damping fluid is connected and which on the other hand communicates with the distributor duct (38).

2. Feed device according to Claim 1, characterised by the features:
- the closure disc has a through bore or several through bores which lies or lie in alignment with the interior of the guide tubes and of which the internal diameter is at least equal to the greatest external dimension of the rod-shaped workpieces,
- each of these through bores can be closed by means of a closure member.

3. Feed device according to Claim 2, characterised by the features:
- each closure member is guided by means of a guide so as to be movable relative to the closure disc between a closed position and an open position.
- an actuating device is provided by means of which the closure member can be moved sometimes into the closed position and sometimes into the open position.

4. Feed device according to Claim 1, characterised by the features:
- the closure disc (25) has at least one through bore (42) which lies in alignment with one of the guide tubes (12) and has an internal diameter which is at least equal to the greatest external dimension of the workpieces,
- in alignment with the through bore (42) there is provided a cock (45) the plug (44) of which has a through bore (50) which extends at right angles to the axis of rotation thereof and of which the internal diameter is at least equal to the greatest external dimension of the workpieces.

5. Feed device according to Claim 4, characterised by the feature:
- the cock (45) is constructed as a ball-type cock.

6. Feed device according to Claim 4 or 5, characterised by the feature:
- an actuating device (49) for the cock (45) is provided which is preferably coupled to a power drive (51).

7. Feed device according to one of Claims 1 to 6, characterised by the features:
- in the region of the through bore (42) of the closure disc (25) for the workpieces on the side facing the holding disc (15) the closure disc (25) is provided with a shut-off device (53)
-- which has a through bore (55) which is aligned with the through bore (42) in the closure disc (25) and of which the internal diameter is at least equal to the greatest external dimension of the workpieces,
-- which on the one hand is tightly connected to the closure disc (25), and
-- which on the other hand abuts closely with a guide tube (12) on the holding disc (15) in the region of one of the through bores (18) and with the guide tube (12) shuts off this through bore (18) from the distributor duct (38) for the damping fluid,
- between the shut-off device (53) and the closure part (45) for the through bore (42) of the closure disc (25) the through bore (42) in the closure disc (25) can be connected to the feed pipe for the damping fluid.

8. Feed device according to Claim 7, with a closure part which can be actuated for the through bore in the closure disc, particularly in the form of a cock, characterised by the features:
- the connection to the feed pipe (41; 64) for the damping fluid is made through the closure part (44'),
- if necessary, the closure part (44') is provided with an additional opening (62) to which the feed pipe (41) is connected.

9. Feed pipe according to Claims 4 to 8, characterised by the features:
- a sealing device (65) with a through bore, the passage cross-section of which is co-ordinated with the axial projection of the workpieces is provided on the closure disc (25) in alignment with the through bore (42) thereof in the axial direction outside the closure part (45),
- the sealing device (65 ; 66) has a sealing element (69) which is of resilient construction at least in the radial direction, the said sealing element in the unloaded state being slightly undersized with respect to the axial projection of the workpieces.

10. Feed device according to Claim 9, characterised by the feature:
- an annular channel (71) into which a fluid can be introduced via a controllable feed duct (72) and which can be acted upon with a certain excess pressure is provided on the outer peripheral surface of the sealing element (69).

## Revendications

1. Dispositif d'alimentation en liquide d'amortissement des tubes de guidage d'un tour multibroches ou analogue, dans lequel :
- l'extrémité des tubes de guidage (12), opposée au tambour à broches (11) du tour (10) est fixée à un disque de fixation (15) commun,
- le disque de fixation (15) comporte pour la réception et la fixation de chaque tube de guidage (12), chaque fois, un orifice traversant (18) axial,
- les tubes de guidage (12) comportent à leur extrémité opposée du tambour à broches (11), des éléments de fermeture et d'étanchéité,
- le disque de fixation (15) est monté en rotation à l'aide d'un palier tournant autour de l'axe central du tambour à broches (11),
- il est prévu un bâti (16) recevant le palier de rotation du disque de fixation (15),
- chaque tube de guidage (12) est relié par une ligne de liaison à une conduite d'alimentation (41) commune pour le liquide d'amortissement
caractérisé en ce que :
- comme élément de fermeture, l'extrémité du disque de fixation (15) opposée au tambour à broches (11) comporte un disque de fermeture (25) qui recouvre le disque de fixation (15) au moins jusque dans la zone du diamètre dans laquelle se trouvent les tubes de guidage (12),
- le disque de fermeture (25) est couplé au moins solidairement en rotation au bâti (16),
- le joint est prévu entre le disque de fixation (15) et le disque de fermeture (25) de façon que la face arrière (35) du disque de fixation (15) soit fermée de manière étanche vers l'extérieur pour les orifices traversants (18) des tubes de guidage (12),
- entre le disque de fixation (15) et le disque de fermeture (25), il est prévu une ligne de liaison comme canal de distribution (38) pour le liquide d'amortissement communiquant avec les ouvertures des tubes de guidage (12),
- sur le disque de fermeture (25), il est prévu un orifice traversant (39) auquel est relié, d'une part, la conduite d'alimentation (41) pour le liquide d'amortissement et, d'autre part, le canal de distribution (38).

2. Dispositif d'alimentation selon la revendication 1, caractérisé en ce que :
- le disque de fermeture comporte un orifice traversant ou plusieurs orifices traversants alignés sur le prolongement du volume intérieur des tubes de guidage et dont la dimension libre est au moins égale à la plus grande dimension des pièces en forme de barre,
- chacun des orifices traversants peut être fermé à l'aide d'un organe de fermeture.

3. Dispositif d'alimentation selon la revendication 2, caractérisé en ce que :
- chaque organe d'obturation est guidé de manière mobile à l'aide d'un moyen de guidage par rapport au disque de fermeture, entre une position de fermeture et une position de libération,
- il est prévu un dispositif d'actionnement qui met l'organe de fermeture, d'une part, dans sa position de fermeture, d'autre part, dans sa position de libération.

4. Dispositif d'alimentation selon la revendication 1, caractérisé en ce que :
- le disque de fermeture (25) comporte au moins un orifice traversant (42) situé dans l'alignement de l'un des tubes de guidage (12) et celui-ci a une largeur libre au moins égale à la plus grande dimension extérieure des pièces,
- dans l'alignement du perçage traversant (42), il est prévu un robinet (45) dont le boisseau (44) comporte un orifice traversant (50) dirigé transversalement à son axe de rotation, et dont l'ouverture libre est au moins égale à la plus grande dimension des pièces.

5. Dispositif d'alimentation selon la revendication 4, caractérisé en ce que :
- le robinet (45) est un robinet à boisseau sphérique.

6. Dispositif d'alimentation selon la revendication 4 ou 5, caractérisé en ce que :
- le robinet (45) comporte un dispositif d'actionnement (49) couplé, de préférence, à un moyen d'entraînement (51).

7. Dispositif d'alimentation selon l'une des revendications 1 à 6, caractérisé en ce que :
- le disque de fermeture (25) est muni, au niveau de son orifice traversant (42), d'un dispositif de fermeture (53) pour les pièces, du côté tourné vers le disque de fixation (15), ce dispositif (53)
- comprenant un orifice traversant (55) aligné sur l' orifice traversant (42) du disque de fermeture (25) et dont la dimension libre est au moins égale à la plus grande dimension extérieure de la pièce
- étant relié de manière étanche au disque de fermeture (25), et
- s'appuyant par ailleurs, de façon étanche, dans l'environnement de l'un des orifices traversant (18) avec un tube de guidage (12) contre le disque de fixation (15) et cet orifice traversant (18) avec le tube de guidage (12) étant coupé du canal de distribution (38) pour le liquide d'amortissement
- l'orifice traversant (42) du disque de fermeture (25) peut être relié à la conduite d'alimentation (41) de liquide d'amortissement entre le dispositif de fermeture (53) et le robinet (45) de l'orifice traversant (42) du disque de fermeture (25).

8. Dispositif d'alimentation selon la revendication 7, comportant un organe de fermeture susceptible d'être actionné pour l'orifice traversant du disque de fermeture, cet organe ayant notamment la forme d'un robinet, dispositif caractérisé en ce que :
- la liaison avec la conduite d'alimentation (41, 64) pour le liquide d'aùortissement, se fait à travers l'organe d'obturation (44'),
- dans la mesure où cela est nécessaire, l'organe d'obturation (44') est muni d'un orifice (62) supplémentaire auquel est reliée la conduite d'alimentation (41).

9. Dispositif d'alimentation selon l'une des revendications 4 à 8, caractérisé en ce que :
- le disque de fermeture (25) comporte dans l'alignement de son orifice traversant (42), dans la direction axiale, à l'extérieur du robinet (45), un dispositif d'étanchéité (65) avec un orifice traversant, dont la section de passage dépend de la projection axiale des pièces,
- le dispositif d'étanchéité (65, 66) comporte un organe d'étanchéité (69) élastique au moins dans la direction radiale et qui, à l'état non comprimé, présente une dimension inférieure à la projection axiale des pièces.

10. Dispositif d'alimentation selon la revendication 9, caractérisé en ce que :
- sur la périphérie extérieure de l'organe d'étanchéité (69), il y a un canal annulaire (71) qui peut recevoir un fluide par une conduite d'alimentation (72) commandée et être mis à une certaine surpression.
